# EUROPÄISCHE PATENTSCHRIFT

(11) **EP 2 084 951 B1**
(45) Veröffentlichungstag und Bekanntmachung des Hinweises auf die Patenterteilung: **11.05.2011**
(21) Anmeldenummer: 09151256.6
(22) Anmeldetag: 23.01.2009
(51) Int. Cl.: A01B 59/06, B60D 1/40

(54) **Unterlenkerzusammenbau für eine Anbaueinrichtung eines Traktors**
Lower arm for the draft link of a tractor
Bras inférieur pour le dispositif d'attelage d'un tracteur

(30) Priorität: 02.02.2008 DE 102008007299
(43) Veröffentlichungstag der Anmeldung: 05.08.2009
(73) Patentinhaber: Deere & Company, Moline, IL 61265-8098 (US)
(72) Erfinder: Vergara, Daniel, 28095, Madrid (ES)
(74) Vertreter: Holst, Sönke

(56) Entgegenhaltungen:
- CA-A- 1 012 402
- DE-C1- 3 938 419
- DE-C1- 19 849 061
- DE-C1- 19 849 070

## Beschreibung

Die Erfindung betrifft einen Unterlenkerzusammenbau für eine Anbaueinrichtung eines Traktors, umfassend:
eine erste Strebe, an der endseitig ein Kanal und ein dem Kanal benachbarter Hohlraum angeordnet sind,
eine zweite Strebe, die in den Kanal einschiebbar ist und eine Vertiefung umfasst,
ein dem Hohlraum zugeordnetes Riegelelement zur Verrastung der zweiten Strebe an der ersten Strebe, das zwischen einer Entriegelungsposition einerseits, in der es sich innerhalb des Hohlraums befindet und die zweite Strebe im Kanal verschiebbar ist und einer Rastposition andererseits bewegbar ist, in der es in den Kanal eindringt und bei im Kanal befindlicher zweiter Strebe diese darin arretiert, indem es sich in die Vertiefung erstreckt,
eine Feder, die das Riegelelement in die Rastposition vorspannt und einen ersten, an einer den Hohlraum begrenzenden Wand anliegenden Schenkel und einen zweiten, am Riegelelement anliegenden Schenkel umfasst, und
ein sich durch eine Öffnung in einer den Hohlraum begrenzenden Wand erstreckendes, mit dem Riegelelement verbundenes Griffelement, mit dem ein Bediener das Riegelelement in die Entriegelungsposition bewegen kann, wobei die Feder das Riegelelement durch ihre Federkraft im Hohlraum haltert.

### Stand der Technik

Unterlenker werden bei Traktoren als Bestandteile von Dreipunktanbauvorrichtungen verwendet, um Geräte am Traktor zu befestigen, wie beispielsweise Düngerstreuer, Pflüge und andere Bodenbearbeitungswerkzeuge. Zur Erleichterung der Anbringung des Geräts am Traktor sind zweiteilige Unterlenker bekannt, die aus zwei relativ zueinander teleskopierbaren und voneinander trennbaren Streben aufgebaut ist. Die Streben sind endseitig mit Kugelgelenkaugen versehen, mit denen sie an zugeordneten Punkten des Traktors und des Geräts befestigt werden können. Die Streben werden dann durch Zurücksetzen des Traktors ineinander geschoben und beim Erreichen einer gewünschten Endposition durch eine Riegelvorrichtung aneinander fixiert, so dass das Gerät dann betriebsbereit am Traktor fixiert ist. Die Riegelvorrichtung kann nach Arbeitsende wieder gelöst werden.

Ein derartiger Unterlenker wird in der als gattungsbildend angesehenen US 5 327 978 A beschrieben. Eine mit dem Traktor verbindbare, erste Strebe weist rückseitig einen Kanal auf, in den eine zweite, mit dem Gerät verbindbare Strebe einschiebbar ist. In dem Bereich der zweiten Strebe, der in den Kanal einschiebbar ist, ist eine sägezahnartige Vertiefung eingebracht. Die erste Strebe umfasst im Bereich des Kanals eine Tasche, in der eine Riegelplatte mittels zweier koaxialer, beidseitig angebrachter Schwenkstifte schwenkbar angelenkt ist, die sich durch Bohrungen in der Riegelplatte und in der Seitenwand der Tasche erstrecken. Die Riegelplatte wird mittels einer Spiralfeder, die sich zwischen der Außenfläche der Riegelplatte und der Innenwand der Tasche erstreckt, in Richtung auf den Kanal zu vorgespannt. Dadurch erreicht man, dass die Riegelplatte mittels der Spiralfeder in die Vertiefung gedrückt wird und dort die Streben aneinander arretiert. An der Riegelplatte ist seitlich ein Knopf befestigt, der sich auch durch ein Langloch in der Seitenwand der Tasche erstreckt und ein manuelles Entriegeln ermöglicht, indem ein Bediener den Knopf anfasst und mit ihm die Riegelplatte entgegen der Vorspannung der Feder aus der Vertiefung der zweiten Strebe bewegt. Bei ähnlichen, derzeit im Markt verfügbaren Ausführungsformen dieses Unterlenkers umfasst die Spiralfeder eine koaxial zum Schwenkstift angeordnete Federwendel und zwei Schenkel, von denen einer an der Riegelplatte und einer an der Innenwand der Tasche anliegt.

Bei dieser Anordnung ist als nachteilig anzusehen, dass die Montage des Riegelmechanismus relativ umständlich ist, da die Riegelplatte mit der Spiralfeder durch den Kanal in den Innenraum der Tasche zu verbringen und dort durch Einschieben der Stifte zu fixieren sind.

Die US 2 717 163 A beschreibt eine Kupplungsanordnung zur Verbindung eines Traktors mit einem Anbaugerät oder Anhänger, die ebenfalls zwei teleskopierbare Streben umfasst, die durch eine Riegelanordnung aneinander befestigbar sind. Eine mit einer überstehenden Schulter der zweiten Strebe zusammenwirkende Riegelplatte ist innerhalb eines mit der ersten Strebe verbundenen Gehäuses angeordnet. Das der zweiten Strebe zugewandte Ende der Riegelplatte ist zwischen der Oberseite und der Rückseite des Gehäuses und einem darunter angeordneten Stift in einer U-förmigen Tasche schwenkbar angebracht. Das andere Ende der Riegelplatte ist mit einem Sackgewinde ausgestattet, in das eine Schraube eingeschraubt ist, die sich durch eine Bohrung im Gehäuse nach oben erstreckt. Eine Blattfeder ist einen Endes am Gehäuse angenietet und anderen Endes mit dem Schraubenkopf verbunden und spannt die Riegelplatte nach unten, d. h. auf die zweite Strebe hin vor.

Hier ist als nachteilig anzusehen, dass sich die Feder außerhalb des Gehäuses befindet und demnach ungeschützt gegenüber Verunreinigungen ist. Die Anbringung der Feder ist aufgrund der Niete und der Verbindung mit dem Schraubenkopf ebenfalls recht zeitaufwändig.

Die DE 198 49 070 C1 offenbart eine Anordnung mit einem Unterlenker, der eine Strebe und ein einen Kanal umfassendes Anschlussende umfasst. Dem Kanal ist ein Hohlraum benachbart, in der ein Riegelelement angeordnet ist. Die Anordnung umfasst ferner eine zweite Strebe, die in den Kanal einführbar ist und durch das Riegelelement verriegelt und entriegelt werden kann. Das Riegelelement wird über einen Griff zur Entriegelung betätigt, wobei das Riegelelement mit einer am Hohlraum und am Riegelelement anliegende Blattfeder verbunden ist. Die Blattfeder ist derart ausgebildet und angeordnet, dass das Riegelelement zum einen im Hohlraum durch die Blattfeder gehalten und zum anderen in Richtung der Verriegelungsstellung vorgespannt wird.

Hier ist als nachteilig anzusehen, dass eine Montage des Rastmechanismus, insbesondere ein Einsetzen der Blattfeder, relativ komplex und aufwendig ist.

### Aufgabenstellung

Die der Erfindung zu Grunde liegende Aufgabe wird darin gesehen, einen Unterlenker bereitzustellen, dessen Montage vereinfacht ist.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Unterlenkerzusammenbau für eine Anbaueinrichtung eines Traktors setzt sich aus einer ersten Strebe und einer zweiten Strebe zusammen. An der ersten Strebe sind endseitig ein Kanal und ein dem Kanal benachbarter Hohlraum angeordnet. Die zweite Strebe ist in den Kanal einschiebbar und weist eine Vertiefung auf. Im Hohlraum ist ein zur Verrastung der zweiten Strebe an der ersten Strebe dienendes Riegelelement beweglich angebracht. Das Riegelelement ist zwischen einer Entriegelungsposition, in der es sich innerhalb des Hohlraums befindet und in welcher die zweite Strebe im Kanal verschiebbar ist und einer Rastposition bewegbar, in der es in den Kanal eindringt und die zweite Strebe im Kanal arretiert, indem es sich in die Vertiefung erstreckt, wenn sich die zweite Strebe in der richtigen Position und Orientierung im Kanal befindet. Eine Feder spannt das Riegelelement in die Rastposition vor. Die Feder weist einen ersten, an einer den Hohlraum begrenzenden Wand anliegenden Schenkel und einen zweiten, am Riegelelement anliegenden Schenkel auf. Schließlich ist ein Griffelement vorgesehen, das sich durch eine Öffnung in einer den Hohlraum begrenzenden Wand erstreckt und mit dem Riegelelement verbunden ist. Mit dem Griffelement kann ein Bediener das Riegelelement in die Entriegelungsposition bewegen, indem er es anfasst und derart bewegt, dass das Riegelelement aus der Vertiefung in der zweiten Strebe hinaus in den Hohlraum gelangt und somit die zweite Strebe freigibt. Es wird vorgeschlagen, dass die Feder derart geformt und angeordnet ist, dass sie durch ihre Federkraft das Riegelelement im Hohlraum fixiert. Auf diese Weise dient die Feder nicht nur dazu, das Riegelelement in Richtung auf die Rastposition vorzuspannen, sondern sie dient zusätzlich zur Halterung des Riegelelements im Hohlraum. Dadurch erübrigen sich separate Elemente, wie Schwenkstifte oder dergleichen, um das Riegelelement beweglich innerhalb des Hohlraums zu lagern. Die Montage des Riegelelements im Hohlraum wird gegenüber dem Stand der Technik wesentlich verringert, da sich die Anbringung separater Elemente zur Halterung des Riegelelements im Hohlraum erübrigt. Es ist lediglich die Feder in ihre Position im Hohlraum zu verbringen. Erfindungsgemäß liegt der erste Schenkel der Feder an einer ersten Wand des Hohlraums an, während ein zwischen den Schenkeln der Feder liegender Bereich der Feder an einer zweiten, der ersten Wand des Hohlraums gegenüber liegenden Wand des Hohlraums anliegt. Die Feder ist demnach zwischen den beiden erwähnten Wänden des Hohlraums in sich verspannt und haltert sich selbst und das Riegelelement im Hohlraum. Es wäre aber auch denkbar, dass anstelle des zwischen den Schenkeln der Feder liegenden Bereichs der Feder das durch die Feder gegen die zweite Wand vorgespannte Riegelelement (oder das Riegelelement und der Bereich) an der zweiten Wand anliegt. Vorzugsweise sind die erste Wand und die zweite Wand des Hohlraums in der Längsrichtung des Kanals voneinander beabstandet, d. h. erstrecken sich quer zur Einschubrichtung der zweiten Strebe. Es wäre aber auch möglich, dass die Wände in Querrichtung des Kanals voneinander beabstandet sind.

Die Feder kann als Schwenklagerung für das Riegelelement dienen, was dadurch erreicht werden kann, dass der erste und der zweite Schenkel der Feder durch einen gebogenen Bereich verbunden werden, der das Riegelelement halbkreisförmig (oder um einen beliebigen größeren Winkel, der auch mehrere Umschlingungen einschließen kann) umrundet.

Die Feder hat die Aufgabe, das Riegelelement in die Rastposition vorzuspannen. Ihre Anbringung kann erleichtert werden, indem ihr zweiter Schenkel an einer Wand einer mittigen Öffnung des Riegelelements zur Anlage kommt. Diese Wand ist vorzugsweise abgeschrägt, um größere Abwinkelungen in der Feder zu vermeiden.

Zur Vergrößerung der Stabilität und der Haltekräfte ist vorgeschlagen, die Feder aus zwei Federn zusammen zu setzen, die jeweils einen ersten und zweiten Schenkel umfassen und deren zweiten Schenkel untereinander verbunden sind. Die beiden Federn werden jeweils einer anderen Seite des Riegelelements zugeordnet.

Das Griffelelement kann sich durch eine Öffnung in einer parallel zur Ebene des Riegelelements erstreckenden Frontwand erstrecken (wie in der US 2 717 163 A), so dass der Bediener das Griffelement vom Hohlraum fortzieht, um das Riegelelement in die Entriegelungsposition zu verbringen, oder es erstreckt sich durch ein Langloch in einer Seitenwand des Kanals und des Hohlraums (wie in der US 5 327 978 A).

### Ausführungsbeispiel

In den Zeichnungen ist ein nachfolgend näher beschriebenes Ausführungsbeispiel der Erfindung dargestellt. Es zeigt:
Figur 1 eine seitliche Ansicht eines landwirtschaftlichen Nutzfahrzeugs mit einer Dreipunktanbaueinrichtung einschließlich eines Unterlenkers,
Figur 2 eine seitliche Ansicht des rückwärtigen Bereichs des Unterlenkers,
Figur 3 einen horizontalen Schnitt durch den rückwärtigen Bereich des Unterlenkers entlang der Linie 3-3 der Figur 2 in verriegelter Stellung,
Figur 4 den Schnitt aus Figur 3 in entriegelter Stellung,
Figur 5 eine perspektivische Ansicht der Feder,
Figur 6 eine perspektivische Ansicht des Riegelelements von oben, und
Figur 7 eine perspektivische Ansicht des Riegelelements von unten.

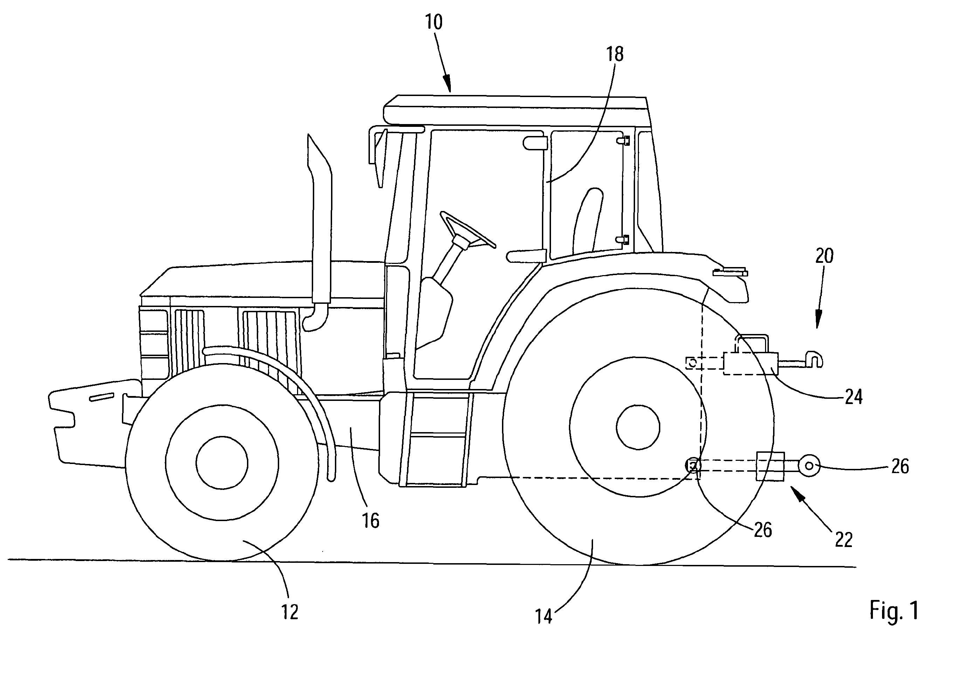

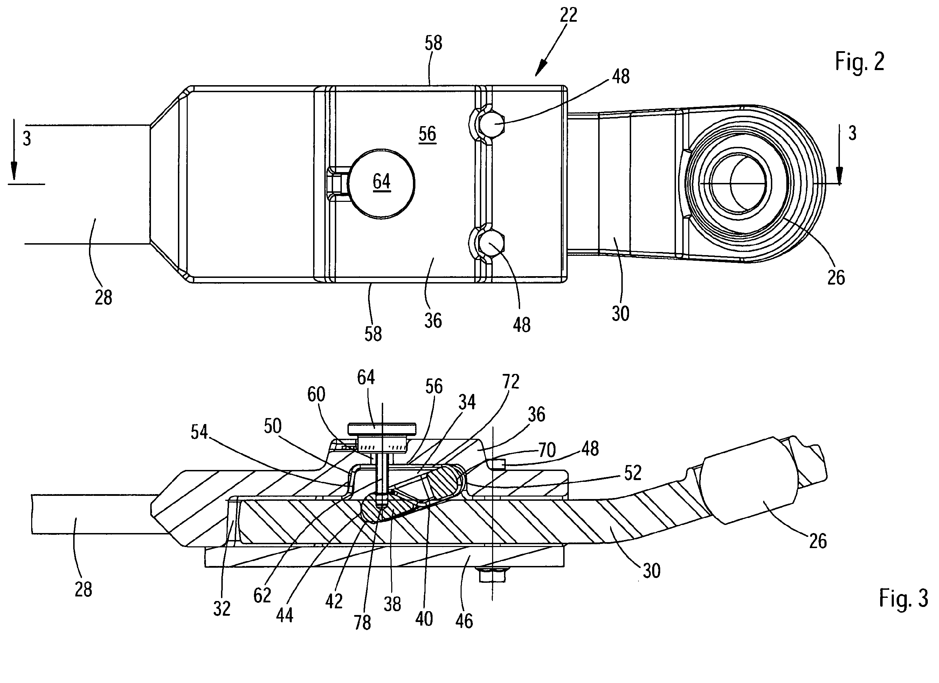

In der Figur 1 ist ein landwirtschaftliches Nutzfahrzeug in Form eines Traktors 10 dargestellt, das einen sich auf vorderen, lenkbaren Rädern 12 und hinteren, antreibbaren Rädern 14 abstützenden Rahmen 16 umfasst, der eine Kabine 18 mit einem darin angeordneten Bedienerarbeitsplatz trägt. An der Rückseite des Rahmens 16 (oder einem damit verbundenen Anbauelement) ist eine Dreipunkt-Anbaueinrichtung 20 mit zwei Unterlenkerzusammenbauten 22 (von denen nur einer zu sehen ist) und einem darüber angebrachten, hydraulischen Oberlenker 24 befestigt. Die Unterlenkerzusammenbauten 22 sind an beiden Enden mit Kugelgelenkaugen 26 ausgestattet, die zur schwenkbeweglichen Festlegung am Traktor (oder einer anderen, selbstfahrenden Arbeitsmaschine) bzw. mit einem anzuhängenden oder von den beiden parallel am Traktor angeordneten Unterlenkern 22 zu tragenden Gerät dienen. Die Unterlenkerzusammenbauten 22 sind in an sich bekannter Weise in der Nähe der Kugelgelenkaugen 26 nach innen bzw. außen abgewinkelt, wie in der Figur 3 am Beispiel des rückwärtigen Endes des Unterlenkerzusammenbaus 22 dargestellt.

Wie am Besten anhand der Figuren 2 bis 4 erkennbar ist, setzt sich ein Unterlenkerzusammenbau 22 jeweils aus einer ersten, vorderen Strebe 28 und einer zweiten, rückwärtigen Strebe 30 zusammen. Die zweite Strebe 30 ist von der ersten Strebe 28 trennbar. Dazu ist an der ersten Strebe 28 endseitig ein Kanal 32 vorgesehen, in welchen die zweite Strebe 30 einführbar ist. Ein dem Kanal 32 benachbarter Hohlraum 36 in einem den Kanal 32 zu einer Seite hin umschließenden Gehäuse 34 nimmt ein Riegelelement 38 auf, das zur Verrastung der zweiten Strebe 30 im Kanal 32 dient, indem es durch eine Feder 40 in eine sägezahnförmige Vertiefung 42 der zweiten Strebe 30 gedrückt wird und stirnseitig an einer vorderen Schulter 44 der Vertiefung 42 anliegt. Zur dem Gehäuse 36 gegenüber liegenden Seite wird der Kanal 32 durch eine Deckplatte 46 abgedeckt, die am in der Figur 3 links eingezeichneten, dem Kugelgelenkauge 26 der ersten Strebe 28 zugewandten Ende mit dem Gehäuse 34 verschweißt und am anderen der zweiten Strebe 30 zugewandten Ende durch zwei beidseits des Kanals 32 angeordnete Schrauben 48 mit dem Gehäuse 36 verbunden ist. Das Gehäuse 36 kann als Schweißzusammenbau oder als Gussteil ausgeführt sein und ist mit dem vorderen Teil der Strebe 28 verschweißt.

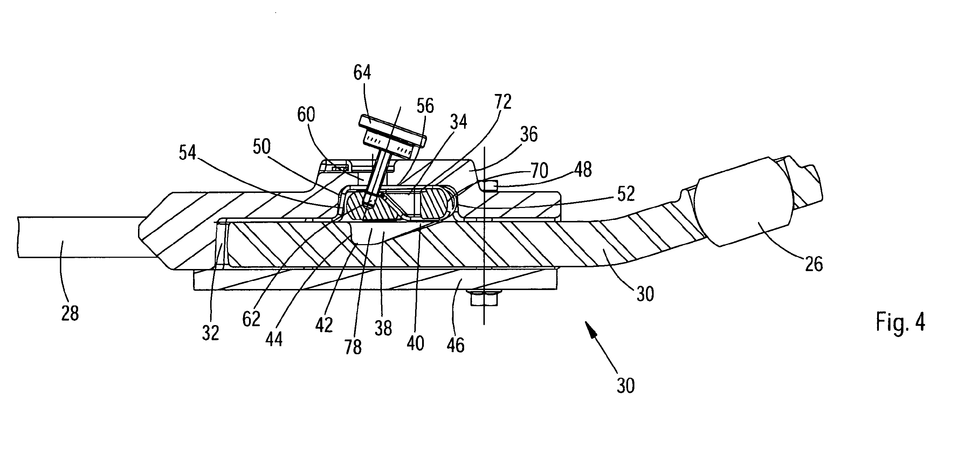

Der Hohlraum 34 umfasst eine erste Wand 50, die sich orthogonal vom Kanal 32 fort erstreckt und dem links eingezeichneten, dem Kugelgelenkauge 26 der ersten Strebe 28 benachbarten Ende des Gehäuses 36 zugewandt ist. Eine zweite Wand 52 des Hohlraums 34 erstreckt sich ebenfalls orthogonal vom Kanal 32 fort und ist der zweiten Strebe 30 zugewandt. Eine Frontwand 56 begrenzt den Hohlraum 34 zwischen den beiden Wänden 50 und 52 nach außen hin. Die Frontwand 56 erstreckt sich in Längsrichtung des Kanals 32 und in Querrichtung dazu zwischen zwei Seitenwänden 58 des Gehäuses 36 (s. Figur 2). Eine Bohrung oder Öffnung 60 in der Frontwand 56 wird durch einen zylindrischen Stift 62 eines Griffelements 64 durchdrungen. Der endseitig mit einem Gewinde ausgestattete Stift 62 ist mit einer zugeordneten Sackgewindebohrung 78 des Riegelelements 38 verschraubt. Das Griffelement 64 ermöglicht es einem Bediener, das Riegelelement 38 aus der in Figur 3 dargestellten Rastposition, in die es durch die Feder 40 vorgespannt wird, in eine Entriegelungsposition zu verbringen, wie sie in der Figur 4 dargestellt ist, um die zweite Strebe 30 dann aus dem Kanal entnehmen zu können.

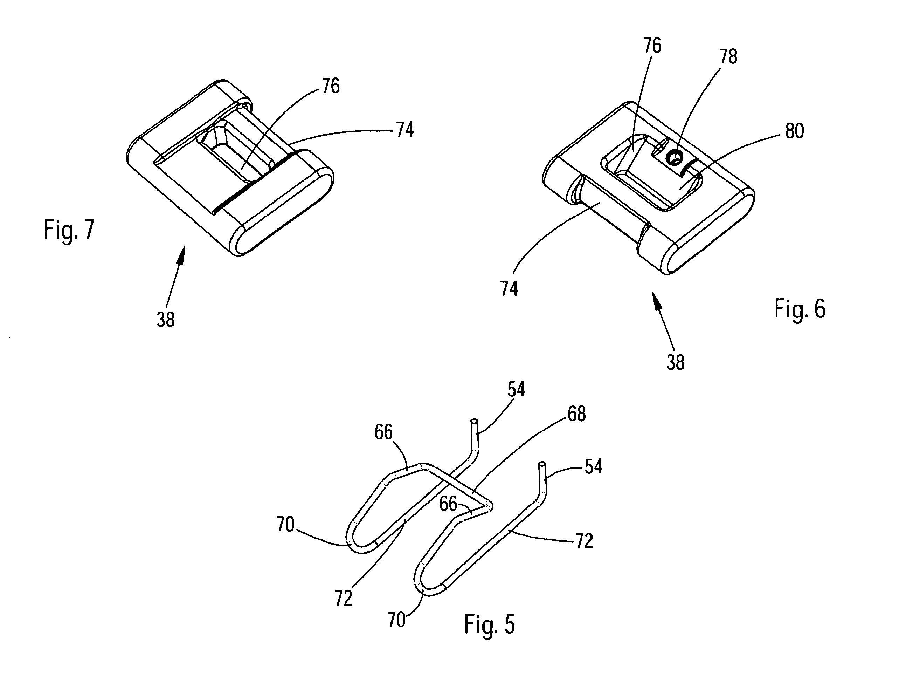

Die Feder 40 ist in der Figur 5 in einer perspektivischen Ansicht dargestellt. Sie umfasst zwei erste Schenkel 54, zwei zweite Schenkel 66, die durch einen Verbindungsbereich 68 untereinander verbunden sind, und zwei sich an die zweiten Schenkel 66 anschließende, in der Ruhestellung um etwa 180° gebogene Bereiche 70, an die sich wiederum gerade Bereiche 72 anschließen, denen sich schließlich die um etwas weniger als 90° abgewinkelten ersten Schenkel 54 anschließen. In der komplett montierten Stellung des Unterlenkerzusammenbaus 22, wie er in den Figuren 3 und 4 gezeigt wird, liegen die ersten Schenkel 54 an der ersten Wand 50 des Hohlraums 34 an. Die geraden Bereiche 72 liegen an der Frontwand 56 an, während die gekrümmten Bereiche 70 an der zweiten Wand 52 des Hohlraums 34 anliegen. Das in den Figuren 6 und 7 dargestellte Riegelelement 38 umfasst einen äußeren ausgesparten Bereich 74, in dem die gebogenen Bereiche 70 der Feder 40 zur Aufnahme kommen, und eine mittlere Öffnung 76 mit einer Wand 80, an der die Schenkel 66 und der Verbindungsbereich 68 der Feder 40 anliegen. Die beiden symmetrischen Teile der Feder 40 sind den beiden Seiten des Riegelelements 38 zugeordnet. Da die Feder 40 derart bemessen ist, dass die ersten Schenkel 54 und die gebogenen Bereiche 70 jeweils unter Federvorspannung an den Wänden 50, 52 des Hohlraums 34 anliegen, werden die Feder 40 und das Riegelelement 38 durch die Kraft der Feder 40 im Hohlraum 34 gehalten. Die Feder 40 bildet weiterhin durch die gebogenen Bereiche 70 eine Schwenklagerung für das Riegelelement 38, das auf diese Weise zwischen den Positionen nach Figur 3 und 4 verschwenkbar ist.

Die Montage des Riegelelements 38 im Hohlraum 34 erfolgt in der Weise, dass zunächst die Feder 40 auf das Riegelelement 38 aufgesetzt wird, so dass die gebogenen Bereiche 70 im ausgesparten Bereich 74 und die ersten Schenkel 66 sowie der Verbindungsbereich 68 an der Wand 80 der mittleren Öffnung 76 zur Anlage kommen. Dann werden die Feder 40 und das Riegelelement 38 in den Kanal 32 eingeführt und mittels eines geeigneten Werkzeugs wird die Feder 40 in den Hohlraum 34 geschoben, bis die geraden Bereiche 72 an der Frontwand 56 anliegen und die ersten Schenkel 54 und die gebogenen Bereiche 70 an den Wänden 50, 52 verspannt sind. Dann wird der Stift 62 des Griffelements 64 in die Sackgewindebohrung 78 eingeschraubt.

Nach alledem ist die Funktion des Unterlenkerzusammenbaus 22 offensichtlich: Ausgehend von der in Figur 3 dargestellten Rastposition des Riegelelements 38, in der es die zweite Strebe 30 mit der ersten Strebe 28 verbindet, indem es an der Schulter 44 der Vertiefung 42 anliegt, kann das Riegelelement 38 durch manuelles Bewegen des Griffelements 64 gegen die Kraft der Feder 40 in die Entriegelungsposition gemäß Figur 4 verschwenkt werden, in der die zweite Strebe 30 aus dem Kanal 32 herausziehbar ist. Zum Wiederanbringen kann dann die zweite Strebe 30 in den Kanal 32 eingeführt werden. Durch manuelles Einschieben oder Zurücksetzen des Traktors 10 kann die zweite Strebe 30 dann soweit in den Kanal 32 eingebracht werden, dass das Riegelelement 38 durch die Vorspannung der Feder 40 in die Vertiefung 42 eindringt und die in Figur 3 dargestellte Situation erreicht wird.

## Patentansprüche

1. Unterlenkerzusammenbau (22) für eine Anbaueinrichtung (20) eines Traktors (10), umfassend:
eine erste Strebe (28), an der endseitig ein Kanal (32) und ein dem Kanal (32) benachbarter Hohlraum (34) angeordnet sind,
eine zweite Strebe (30), die in den Kanal (32) einschiebbar ist und eine Vertiefung (42) umfasst,
ein dem Hohlraum (34) zugeordnetes Riegelelement (38) zur Verrastung der zweiten Strebe (30) an der ersten Strebe (28), das zwischen einer Entriegelungsposition einerseits, in der es sich innerhalb des Hohlraums (34) befindet und die zweite Strebe (30) im Kanal (32) verschiebbar ist und einer Rastposition andererseits bewegbar ist, in der es in den Kanal (32) eindringt und bei im Kanal (32) befindlicher zweiter Strebe (30) diese darin arretiert, indem es sich in die Vertiefung (42) erstreckt,
eine Feder (40), die das Riegelelement (38) in die Rastposition vorspannt und einen ersten, an einer den Hohlraum (34) begrenzenden Wand (50) anliegenden Schenkel (54) und einen zweiten, am Riegelelement (38) anliegenden Schenkel (66) umfasst, und
ein sich durch eine Öffnung (60) in einer den Hohlraum (34) begrenzenden Wand (56) erstreckendes, mit dem Riegelelement (38) verbundenes Griffelement (64), mit dem ein Bediener das Riegelelement (38) in die Entriegelungsposition bewegen kann, wobei die Feder (40) das Riegelelement (38) durch ihre Federkraft im Hohlraum (34) haltert,
**dadurch gekennzeichnet, dass** der erste Schenkel (54) der Feder (40) an einer ersten Wand (50) des Hohlraums (34) anliegt, während ein zwischen den Schenkeln (54, 66) liegender Bereich (70) der Feder (40) an einer zweiten, der ersten Wand (50) gegenüberliegenden Wand (52) des Hohlraums (34) anliegt.

2. Unterlenkerzusammenbau (22) nach Anspruch 1, **dadurch gekennzeichnet, dass** sich die erste und zweite Wand (50, 52) quer zur Einschubrichtung der zweiten Strebe (30) erstrecken.

3. Unterlenkerzusammenbau (22) nach Anspruch 1 oder 2,
**dadurch gekennzeichnet, dass** die Feder (40) eine Schwenklagerung für das Riegelelement (38) bildet.

4. Unterlenkerzusammenbau (22) nach Anspruch 3, **dadurch gekennzeichnet, dass** der erste Schenkel (54) und der zweite Schenkel (66) der Feder (40) durch einen gebogenen Bereich (70) untereinander verbunden sind, der das Riegelelement (38) umschließt.

5. Unterlenkerzusammenbau (22) nach einem der Ansprüche 1 bis 4, **dadurch gekennzeichnet, dass** der zweite Schenkel (66) der Feder (40) an einer Wand (80) einer mittigen Öffnung (76) des Riegelelements (38) anliegt.

6. Unterlenkerzusammenbau (22) nach einem der Ansprüche 1 bis 5, **dadurch gekennzeichnet, dass** die Feder (40) sich aus zwei Federn zusammensetzt, die jeweils einer anderen Seite des Riegelelements (38) zugeordnet sind und einen ersten und zweiten Schenkel (54, 66) umfassen, wobei die zweiten Schenkel (66) durch einen Verbindungsbereich (68) untereinander verbunden sind.

7. Unterlenkerzusammenbau (22) nach einem der Ansprüche 1 bis 6, **dadurch gekennzeichnet, dass** sich das Griffelement (64) durch eine Öffnung (60) in einer parallel zur Ebene des Hohlraums (34) erstreckenden Frontwand (56) des Hohlraums (34) erstreckt.

## Claims

1. Lower link assembly (22) for an attachment (20) for a tractor (10), comprising:
a first strut (28), at the end thereof a channel (32) and a hollow space (34) adjacent to the channel (32) being arranged,
a second strut (30), which may be inserted into the channel (32) and which comprises a recess (42),
a locking element (38) associated with the hollow space (34) for latching the second strut (30) to the first strut (28) which may be moved between an unlocked position, on the one hand, in which it is located inside the hollow space (34) and the second strut (30) may be displaced in the channel (32) and, on the other hand, a latching position in which it penetrates the channel (32) and when the second strut (30) is located in the channel (32), locks said strut therein, by extending into the recess (42),
a spring (40) which pretensions the locking element (38) in the latching position and comprises a first limb (54) bearing against a wall (50) defining the hollow space (34) and a second limb (66) bearing against the locking element (38), and
a grip element (64) extending through an opening (60) in a wall (56) defining the hollow space (34), connected to the locking element (38), by means of which an operator may move the locking element (38) into the unlocked position, the spring (40) retaining the locking element (38) by the spring force thereof in the hollow space (34),
**characterized in that** the first limb (54) of the spring (40) bears against a first wall (50) of the hollow space (34), whilst a region (70) of the spring (40) located between the limbs (54, 66) bears against a second wall (52) of the hollow space (34) opposing the first wall (50).

2. Lower link assembly (22) according to Claim 1, **characterized in that** the first and second walls (50, 52) extend transversely to the direction of insertion of the second strut (30).

3. Lower link assembly (22) according to Claim 1 or 2, **characterized in that** the spring (40) forms a pivot bearing for the locking element (38).

4. Lower link assembly (22) according to Claim 3, **characterized in that** the first limb (54) and the second limb (66) of the spring (40) are connected to one another by a bent region (70) which encloses the locking element (38).

5. Lower link assembly (22) according to one of Claims 1 to 4, **characterized in that** the second limb (66) of the spring (40) bears against a wall (80) of a central opening (76) of the locking element (38).

6. Lower link assembly (22) according to one of Claims 1 to 5, **characterized in that** the spring (40) is made up of two springs, which are respectively associated with a different side of the locking element (38) and comprise a first and second limb (54, 66), the second limbs (66) being connected to one another by a connecting region (68).

7. Lower link assembly (22) according to one of Claims 1 to 6, **characterized in that** the grip element (64) extends through an opening (60) in a front wall (56) of the hollow space (34) extending parallel to the plane of the hollow space (34).

## Revendications

1. Assemblage de bras inférieur (22) pour un dispositif d'attelage (20) d'un tracteur (10), comprenant :
un premier montant (28), sur lequel sont disposés, du côté de l'extrémité, un canal (32) et une cavité (34) adjacente au canal (32),
un deuxième montant (30), qui peut être inséré dans le canal (32) et qui comprend un renfoncement (42),
un élément de verrouillage (38) associé à la cavité (34) pour l'encliquetage du deuxième montant (30) au premier montant (28), qui peut être déplacé entre une position de déverrouillage d'une part, dans laquelle il se trouve à l'intérieur de la cavité (34) et le deuxième montant (30) peut coulisser dans le canal (32), et
une position d'encliquetage d'autre part, dans laquelle il pénètre dans le canal (32) et, lorsque le deuxième montant (30) se trouve dans le canal (32), l'y bloque, par le fait qu'il s'étend dans le renfoncement (42),
un ressort (40), qui précontraint l'élément de verrouillage (38) dans la position d'encliquetage et comprend une première branche (54) s'appliquant contre une paroi (50) délimitant la cavité (34), et une deuxième branche (66) s'appliquant contre l'élément de verrouillage (38), et
un élément de préhension (64) s'étendant à travers une ouverture (60) dans une paroi (56) délimitant la cavité (34), connecté à l'élément de verrouillage (38), avec lequel un opérateur peut déplacer l'élément de verrouillage (38) dans la position de déverrouillage, le ressort (40) retenant l'élément de verrouillage (38) dans la cavité (34) sous l'effet de sa force de ressort, **caractérisé en ce que** la première branche (54) du ressort (40) s'applique contre une première paroi (50) de la cavité (34), tandis qu'une région (70) du ressort (40) située entre les branches (54, 66) s'applique contre une deuxième paroi (52) de la cavité (34) opposée à la première paroi (50).

2. Assemblage de bras inférieur (22) selon la revendication 1, **caractérisé en ce que** la première et la deuxième paroi (50, 52) s'étendent transversalement à la direction d'insertion du deuxième montant (30).

3. Assemblage de bras inférieur (22) selon la revendication 1 ou 2, **caractérisé en ce que** le ressort (40) forme un palier pivotant pour l'élément de verrouillage (38).

4. Assemblage de bras inférieur (22) selon la revendication 3, **caractérisé en ce que** la première branche (54) et la deuxième branche (66) du ressort (40) sont connectées l'une à l'autre par une région courbe (70) qui entoure l'élément de verrouillage (38).

5. Assemblage de bras inférieur (22) selon l'une quelconque des revendications 1 à 4, **caractérisé en ce que** la deuxième branche (66) du ressort (40) s'applique contre une paroi (80) d'une ouverture centrale (76) de l'élément de verrouillage (38).

6. Assemblage de bras inférieur (22) selon l'une quelconque des revendications 1 à 5, **caractérisé en ce que** le ressort (40) se compose de deux ressorts, qui sont associés à chaque fois à un autre côté de l'élément de verrouillage (38) et comprennent une première et une deuxième branche (54, 66), les deuxièmes branches (66) étant connectées entre elles par une région de connexion (68).

7. Assemblage de bras inférieur (22) selon l'une quelconque des revendications 1 à 6, **caractérisé en ce que** l'élément de préhension (64) s'étend à travers une ouverture (60) dans une paroi avant (56) de la cavité (34) s'étendant parallèlement au plan de la cavité (34).
